# FASCICULE DE BREVET EUROPEEN

(11) **EP 3 159 048 B1**
(45) Date de publication et mention de la délivrance du brevet: **11.04.2018**
(21) Numéro de dépôt: 16189230.2
(22) Date de dépôt: 16.09.2016
(51) Int. Cl.: A63B 29/02, F16B 45/02

(54) **DISPOSITIF PORTE-MATÉRIELS ADAPTABLE À UN HARNAIS D'ESCALADE**
MATERIALSCHLAUFENVORRICHTUNG, DIE AN EINEN KLETTERGURT ANPASSBAR IST
MATERIAL-HOLDER DEVICE WHICH CAN BE ADAPTED TO A CLIMBING HARNESS

(30) Priorité: 19.10.2015 FR 1559937
(43) Date de publication de la demande: 26.04.2017
(73) Titulaire: Zedel, 38920 Crolles (FR)
(72) Inventeur: LANEZ, Raphaël, 38920 Crolles (FR)
(74) Mandataire: Talbot, Alexandre

(56) Documents cités:
- FR-A1- 2 847 481
- US-A- 5 940 943
- US-A1- 2009 000 086

## Description

### Domaine technique de l'invention

L'invention concerne un dispositif porte-matériels adaptable à un baudrier d'escalade, et comprenant :
- un corps en forme de crochet pour l'accrochage d'accessoires ou d'outils d'assurance,
- un doigt mobile monté à pivotement à l'une des extrémités du corps pour fermer ou ouvrir l'espace d'accès à l'intérieur du crochet,
- et des moyens de fixation du corps au baudrier de l'utilisateur.

### Etat de la technique

En escalade et alpinisme, les grimpeurs ont l'habitude d'accrocher différents types d'accessoires à un mousqueton de portage solidaire de la ceinture du harnais ou du cuissard. En fonction du type de voie à escalader, les accessoires peuvent être des dégaines, descendeurs, bloqueurs, broches à glace, pitons, coinceurs, etc. Le passage avec jeu du mousqueton de portage autour de la ceinture, est susceptible d'entraîner des mouvements de basculement plus ou moins prononcés lors de la progression du grimpeur dans la voie. Le désagrément occasionné par ces mouvements de basculement devient même gênant pour le grimpeur en fonction du poids des accessoires emportés.

Le document EP 1522748 concerne un mousqueton porte-matériel dont le corps est équipé d'une patte de retenue agencée à l'intérieur du corps, et pouvant être accrochée à la ceinture d'un baudrier. La patte s'étend en regard de la branche latérale du corps, à l'opposé du doigt, de manière à définir une rainure interne destinée à être insérée sur une sangle du harnais pour assurer l'immobilisation du mousqueton. Une telle fixation de la patte de retenue peut néanmoins bouger lors de la progression ou manipulation de l'utilisateur.

Le document FR 2847481 est un mousqueton double dont l'élément filaire et le doigt mobile s'ouvrent vers l'intérieur du corps, et qui ne permet pas de prendre en sanwich la ceinture ou sangle pour être attaché fermement au harnais. Il subsiste un jeu important qui n'est pas souhaitable pour un dispositif porte-matériel.

### Objet de l'invention

L'objet de l'invention consiste à réaliser un porte-matériels facilement adaptable à un harnais, et y être solidement accroché pour éviter qu'il ne bouge pendant la mise en place et le retrait des accessoires et outils.

Le dispositif porte-accessoires selon l'invention est caractérisé en ce que les moyens de fixation comportent :
- un élément d'attache filaire ayant une première extrémité articulée au corps et une deuxième extrémité opposée coopérant avec un organe de retenue fixe solidaire du corps, ledit élément d'attache filaire étant susceptible d'être déplacé par pivotement à l'extérieur du corps, pour occuper soit une position fermée dans laquelle l'élément d'attache filaire s'étend le long et à l'extérieur du corps après engagement de ladite deuxième extrémité dans l'organe de retenue, de manière à prendre en sandwich la ceinture ou sangle du harnais, soit une position relevée après échappement de ladite deuxième extrémité hors de l'organe de retenue,
- une pièce de verrouillage agencée pour verrouiller ou déverrouiller ladite deuxième extrémité dans la position fermée.

Selon une caractéristique de l'invention, l'élément d'attache filaire comporte un fil métallique rigide ou flexible, par exemple en acier inoxydable.

Selon une variante, l'élément d'attache filaire est un fil textile résistant à base de matière plastique.

Selon un mode de réalisation préférentiel, l'organe de retenue de l'élément filaire en position fermée, est formé par un crochet solidarisé à la partie inférieure du corps. La pièce de verrouillage comporte un étrier en forme de U traversé avec jeu par l'élément d'attache filaire pour être déplaçable d'un demi-tour entre une position verrouillée et une position déverrouiller lorsque le dispositif se trouve dans ladite position fermée.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue schématique du dispositif porte-matériels selon l'invention, représenté dans la position relevée de l'élément d'attache filaire ;
- la figure 2 montre une vue de profil de la figure 1 après abaissement de l'élément d'attache filaire vers le corps ;
- la figure 3 est une vue en coupe à échelle agrandie, du fil d'attache en position fermée dans le crochet de retenue ;
- les figures 4 et 6 sont des vues identiques de la figure 1, respectivement en position fermée en verrouillée, et en position fermée verrouillée du fil d'attache ;
- les figures 5 et 7 représentent des vues à échelles agrandies de la pièce de verrouillage, illustrée dans les deux positions des figures 4 et 6.

### Description d'un mode particulier de réalisation

En référence aux figures, un dispositif porte-matériels 10 est adaptable à la ceinture d'un baudrier d'escalade (non représenté), et présente un profil de mousqueton comportant un corps 11 en forme de C, et un doigt 12 mobile articulé à l'une des extrémités 13 du corps 11 pour fermer ou ouvrir l'espace d'accès du corps. Le corps est réalisé en alliage d'aluminium, ou en tout autre matière.

Le doigt 12 est réalisé, à titre d'exemple, en fil d'acier conformé selon une épingle. Elle est dotée de deux ergots 14 (un seul étant visible) recourbés en équerre et introduits dans des orifices décalés, ménagés à la partie supérieure dans l'extrémité 13 du corps 11. Le doigt 12 comporte de plus une tête d'accrochage 15 coopérant en position de fermeture avec un bec 16 agencé à l'extrémité inférieure du corps 11. Le montage excentré des ergots 14 constitue un moyen de rappel élastique du doigt 12 vers la position de fermeture.

Selon une variante, le doigt 12 pivotant peut également être constitué par un tube ou barreau, lequel est sollicité en position de fermeture par un ressort de torsion.

La partie supérieure du corps 11 comporte avantageusement une surface de support 17 externe pour autoriser le rangement provisoire des accessoires après ouverture du doigt 12. De préférence, la surface de support 17 est équipée d'une pluralité de nervures 18 pour le rangement côte à côte des accessoires et outils.

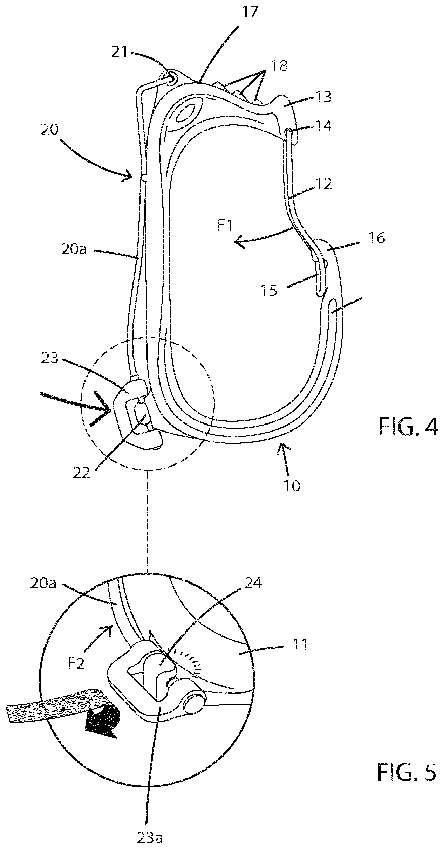

L'axe d'articulation du doigt 12 mobile se trouve avantageusement à la partie supérieure du corps, le mouvement de pivotement du doigt 12 vers la position d'ouverture s'effectuant vers l'intérieur du corps 11 selon le sens de la flèche F1 (figure 4).. Un trou 19 est ménagé dans la partie supérieure du corps 11 pour autoriser l'accrochage d'une ficelle destinée à sécuriser les accessoires et outils transportés.

La fixation du dispositif porte-matériels 10 sur le harnais s'effectue au moyen d'un élément d'attache 20 filaire, lequel est articulé au sommet du corps 11 en un point d'aticulation 21, situé sur la surface de support 17 à l'extrémité opposée de l'axe de pivotement du doigt mobile 12. L'élément d'attache 20 est de préférence un fil 20a d'acier rigide ou flexible, par exemple en acier inoxydable, mais il est possible d'utiliser tout autre système d'attache métallique ou plastique de forme quelconque.

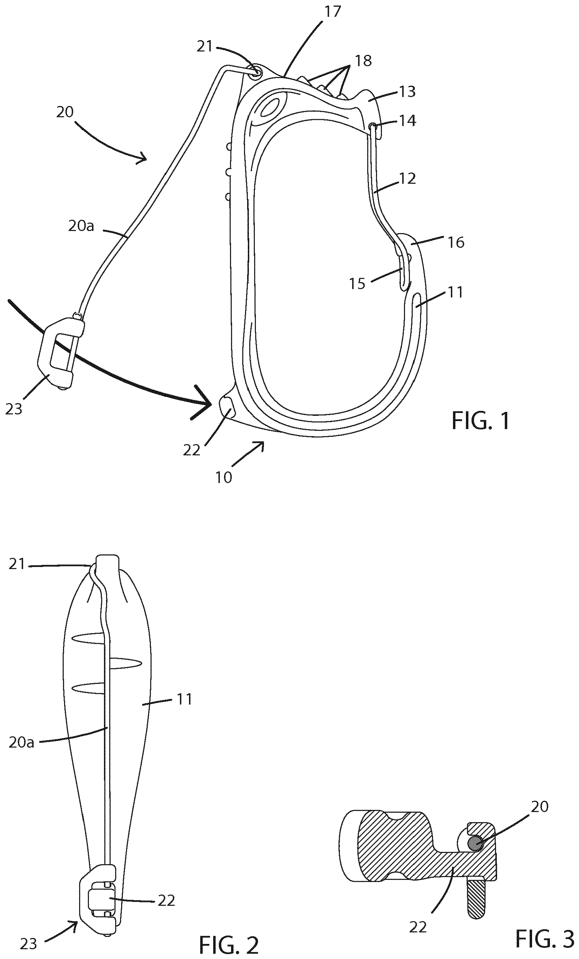

L'élément d'attache 20 filaire peut être déplacé par pivotement à l'extérieur du corps, entre une première position fermée (figures 4) et 6), et une deuxième position relevée (figure 1). Dans la première position fermée, l'élément d'attache 20 filaire s'étend le long de la branche verticale à l'extérieur du corps 11, de manière à prendre en sandwich la ceinture ou sangle du harnais. L'extrémité inférieure du fil 20a de l'élément d'attache 20 estt accrochée à un crochet 22 de retenue solidaire du corps 11. Pour éviter tout échappement intempestif du fil 20a dans la position fermée, une pièce de verrouillage 23 est montée sur l'extrémité du fil 20a de l'élément d'attache 20 de manière à assurer un verrouillage positif dans la position fermée. Le dispositif porte-matériels 10 est ainsi bloqué efficacement sur le harnais pour éviter qu'il ne bouge pendant la pratique de l'escalade.

Pour le passage vers la deuxième position relevée, il suffit de débloquer préalablement la pièce de verrouillage 23 dans le sens de la flèche F2, figure 5, et de retirer le fil 20a hors du crochet 22 de retenue. Le fil 20a est alors libéré à la partie inférieure, et peut être déplacé vers la position relevée pour permettre le retrait du dispositif porte-matériels. Ce dernier est ainsi facilement amovible dans la position de la figure 1, et peut être retiré ou déplacé le long du harnais.

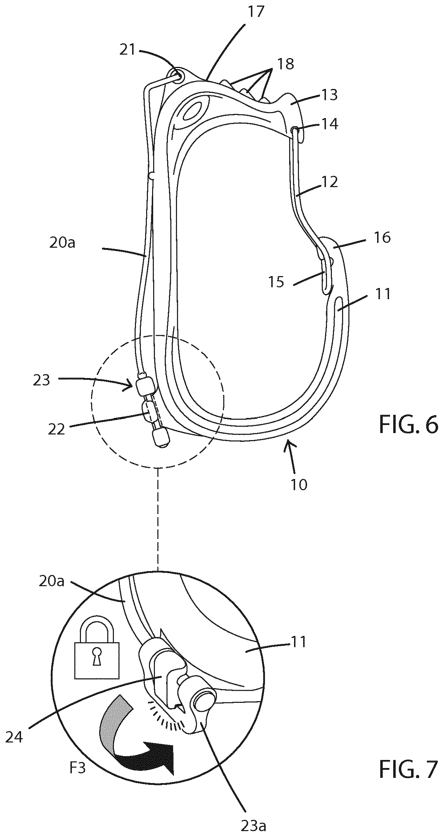

A titre d'exemple illustré en détail aux figures 5 et 7, la pièce de verrouillage 23 comporte un étrier 23a en forme de U, dont les deux branches d'extrémités sont traversées par le fil 20a d'attache avec un léger jeu, autorisant l'étrier 23a de pivoter sur fil 20a d'un demi-tour. La partie terminale du fil 20a entre les branches de l'étrier 23a vient s'accrocher dans le crochet 22 dans la position fermée. Le pivotement de l'étrier 23a dans le sens de la flèche F3 passe au-dessus d'une butée 24 du crochet 22, et vient ensuite verrouiller le fil 20a, lequel est prisonnier et verrouillé dans le crochet.

La présence de la pièce de verrouillage 23 permet ainsi d'obtenir une position fermée verrouillée (figures 2 et 7), et une position fermée non verrouillée (figure 5).

Selon une variante de réalisation, la pièce de verrouillage au lieu d'être montée sur l'extrémité du fil, pourrait se trouver sur le corps, au voisinage du crochet.

## Revendications

1. Dispositif porte-matériels (10) adaptable à un baudrier d'escalade, et comprenant :
- un corps (11) en C pour l'accrochage d'accessoires ou d'outils d'assurance,
- un doigt (17) mobile monté à pivotement à l'une des extrémités du corps (11) pour fermer ou ouvrir l'espace d'accès à l'intérieur du corps,
- et des moyens de fixation du corps (11) à une sangle ou ceinture du baudrier de l'utilisateur,
**caractérisé en ce que** les moyens de fixation comportent :
- un élément d'attache (20) filaire ayant une première extrémité articulée au corps (11), et une deuxième extrémité opposée coopérant avec un organe de retenue (22) fixe solidaire du corps (11), ledit élément d'attache filaire étant susceptible d'être déplacé par pivotement à l'extérieur du corps (11), pour occuper soit une position fermée dans laquelle l'élément d'attache (20) filaire s'étend le long et à l'extérieur du corps (11) après engagement de ladite deuxième extrémité dans l'organe de retenue (22), de manière à prendre en sandwich la ceinture ou sangle du harnais, soit une position relevée après échappement de ladite deuxième extrémité hors de l'organe de retenue (22),
- une pièce de verrouillage (23) agencée pour verrouiller ou déverrouiller ladite deuxième extrémité dans la position fermée.

2. Dispositif porte-matériels, selon la revendication 1, **caractérisé en ce que** l'élément d'attache (20) filaire est réalisé par un fil (20a) métallique rigide ou flexible.

3. Dispositif porte-matériels selon la revendication 2, **caractérisé en ce que** le fil (20a) est en acier inoxydable.

4. Dispositif porte-matériels selon la revendication 1, **caractérisé en ce que** l'élément d'attache (20) filaire est un fil textile résistant à base de matière plastique.

5. Dispositif porte-matériels selon la revendication 1, **caractérisé en ce que** l'organe de retenue (22) est formé par un crochet solidarisé à la partie inférieure du corps (11).

6. Dispositif porte-matériels selon la revendication 1, **caractérisé en ce que** la pièce de verrouillage (23) est agencée sur l'élément d'attache (20) filaire au voisinage de ladite deuxième extrémité.

7. Dispositif porte-matériels selon la revendication 5, **caractérisé en ce que** la pièce de verrouillage (23) est située sur le corps près du crochet de l'organe de retenue.

8. Dispositif porte-matériels selon la revendication 6, **caractérisé en ce que** la pièce de verrouillage (23) comporte un étrier (23a) en forme de U traversé avec jeu par l'élément d'attache (20) filaire pour être déplaçable d'un demi-tour entre une position verrouillée et une position déverrouiller lorsque le dispositif se trouve dans ladite position fermée.

9. Dispositif porte-matériels selon la revendication 5, **caractérisé en ce que** l'élément d'attache (20) filaire est articulé par sa première extrémité (13) supérieure au sommet du corps (11) en un point d'articulation (21), tandis que la deuxième extrémité inférieure est accrochée en position fermée au crochet de l'organe de retenue (22).

## Patentansprüche

1. Materialtragvorrichtung (10), die an einen Klettergurt anpassbar ist und umfasst:
- einen C-förmigen Körper (11) zum Einhängen von Zubehör und Sicherungswerkzeug,
- einen beweglichen Finger (17), der schwenkbar an eines der Enden des Körpers (11) montiert ist, um den Zugangsbereich innerhalb des Körpers zu öffnen oder zu schließen,
- und Befestigungsmittel für den Körper (11) an einem Riemen oder Gurtband des Klettergurts des Benutzers,
**dadurch gekennzeichnet, dass** die Befestigungsmittel umfassen:
- ein kabelartiges Befestigungselement (20), dessen erstes Ende an den Körper (11) angelenkt ist, und dessen zweites, entgegengesetztes Ende mit einem festen Rückhalteelement (22) zusammenwirkt, das fest mit dem Körper (11) verbunden ist, welches kabelartige Befestigungselement geeignet ist, durch Schwenken nach außerhalb des Körpers (11) bewegt zu werden, um entweder eine geschlossene Stellung einzunehmen, in der sich das kabelartige Befestigungselement (20) nach Eingriff des zweiten Endes in das Rückhalteelement (22) entlang und außerhalb des Körpers (11) erstreckt, um das Gurtband oder den Riemen des Klettergurts sandwichartig einzuschließen, oder nach Entweichen des zweiten Endes aus dem Rückhalteelement (22) eine abgehobene Stellung einzunehmen,
- ein Verriegelungselement (23), das so vorgesehen ist, dass es das genannte zweite Ende in geschlossener Stellung verriegelt.

2. Materialtragvorrichtung nach Anspruch 1, **dadurch gekennzeichnet, dass** das kabelartige Befestigungselement (20) aus einem starren oder flexiblen Metallkabel (20a) besteht.

3. Materialtragvorrichtung nach Anspruch 2, **dadurch gekennzeichnet, dass** das Kabel (20a) aus rostfreiem Stahl ist.

4. Materialtragvorrichtung nach Anspruch 1, **dadurch gekennzeichnet, dass** das kabelartige Befestigungselement (20) ein reißfestes Textilkabel auf Kunststoffbasis ist.

5. Materialtragvorrichtung nach Anspruch 1, **dadurch gekennzeichnet, dass** das Rückhalteelement (22) von einem Haken gebildet wird, der fest mit dem unteren Teil des Körpers (11) verbunden ist.

6. Materialtragvorrichtung nach Anspruch 1, **dadurch gekennzeichnet, dass** das Verriegelungselement (23) am kabelartigen Befestigungselement (20) nahe dem besagten zweiten Ende angeordnet ist.

7. Materialtragvorrichtung nach Anspruch 5, **dadurch gekennzeichnet, dass** das Verriegelungselement (23) nahe dem Haken des Rückhalteelements am Körper angeordnet ist.

8. Materialtragvorrichtung nach Anspruch 6, **dadurch gekennzeichnet, dass** das Verriegelungselement (23) einen U-förmigen Bügel (23a) umfasst, durch den das kabelartige Befestigungselement (20) mit Spiel geführt ist, um um eine halbe Umdrehung zwischen einer verriegelten und einer entriegelten Stellung versetzt werden zu können, wenn sich die Vorrichtung in der genannten geschlossenen Stellung befindet.

9. Materialtragvorrichtung nach Anspruch 5, **dadurch gekennzeichnet, dass** das kabelartige Befestigungselement (20) mit seinem ersten, oberen Ende (13) am oberen Ende des Körpers (11) an einem Gelenkpunkt (21) angelenkt ist, während das zweite, untere Ende in geschlossener Stellung am Haken des Rückhalteelements (22) eingehängt ist.

## Claims

1. Material-holder device (10) which can be adapted to a climbing harness, and comprising:
- a C-shaped body (11) for attaching accessories and belaying tools,
- a movable finger (17) mounted swivelling on one of the ends of the body (11) to close or open the access space to the inside of the body,
- and means for fixing the body (11) to a strap or belt of the user's harness,
**characterized in that** the means for fixing comprise:
- a wire attachment part (20) having a first end articulated on the body (11), and a second opposite end collaborating with fixed securing means (22) integral to the body (11), said wire attachment part being able to be moved by swivelling to the outside of the body (11) to occupy either a closed position in which the wire attachment part (20) extends along and outside the body (11) after said second end has engaged in the securing means (22) so as to sandwich the belt or strap of the harness, or a raised position after said second end has disengaged from the securing means (22),
- a latching part (23) arranged to latch or unlatch said second end in the closed position.

2. Material-holder device according to claim 1, **characterized in that** the wire attachment part (20) is achieved by a rigid or flexible metal wire (20a).

3. Material-holder device according to claim 2, **characterized in that** the wire (20a) is made from stainless steel.

4. Material-holder device according to claim 1, **characterized in that** the wire attachment part (20) is a strong textile wire having a base formed by plastic material.

5. Material-holder device according to claim 1, **characterized in that** the securing means (22) is formed by a hook securedly attached to the bottom part of the body (11).

6. Material-holder device according to claim 1, **characterized in that** the latching part (23) is arranged on the wire attachment part (20) close to said second end.

7. Material-holder device according to claim 5, **characterized in that** the latching part (23) is located on the body near the hook of the securing means.

8. Material-holder device according to claim 6, **characterized in that** the latching part (23) comprises a U-shaped bracket (23a) through which the wire attachment part (20) passes with clearance to be movable through a half-turn between a latched position and an unlatched position when the device is in said closed position.

9. Material-holder device according to claim 6, **characterized in that** the wire attachment part (20) is articulated via its top first end (13) on the top of the body (11) at a hinge point (21), whereas the bottom second end is attached in the closed position to the hook of the securing means (22).
